# EUROPEAN PATENT APPLICATION

(11) **EP 3 073 555 A2**
(43) Date of publication of application: **28.09.2016**
(21) Application number: 16160177.8
(22) Date of filing: 14.03.2016
(51) Int. Cl.: H01M 4/131, H01M 4/505, H01M 4/525, H01M 10/0525, H01M 4/62, H01M 10/0585

(54) **NONAQUEOUS ELECTROLYTE SECONDARY BATTERY**

(30) Priority: 26.03.2015 JP 2015064630
(71) Applicant: Automotive Energy Supply Corporation, Zama-shi, Kanagawa 252-0012 (JP)
(72) Inventor: Tanizaki, Hiroaki, Kanagawa, 252-0012 (JP); Nakagawa, Takashi, Kanagawa, 252-0012 (JP)
(74) Representative: Herzog, Fiesser & Partner Patentanwälte PartG mbB

(57) **Abstract**

Provided is a nonaqueous electrolyte secondary battery (1) including: a positive electrode (41) including a positive electrode current collector (41a), and a positive electrode active material layer (41b, 41c) formed on the positive electrode current collector (41a); a negative electrode (42) including a negative electrode current collector (42a), and a negative electrode active material layer (42b, 42c) formed on the negative electrode current collector (42a); a separator (43) disposed between the positive electrode (41) and the negative electrode (42); and an electrolyte solution. The positive electrode active material layer (41b, 41c) includes a first positive electrode active material with a spinel structure, and a second positive electrode active material with a layered crystal structure, the negative electrode active material layer (42b, 42c) includes a negative electrode active material and an aqueous binder, and a mass ratio (A/B) of the first positive electrode active material (A) to the second positive electrode active material (B) is in a range of 70/30 to 95/5. A battery with improved low-temperature characteristics is thus provided.

## Description

### CROSS-REFERENCE TO RELATED APPLICATION

This application claims priority from Japanese Patent Application No. 2015-064630, filed with the Japan Patent Office on March 26, 2015, the entire content of which is hereby incorporated by reference.

### BACKGROUND

### 1. Technical Field

The present disclosure relates to a nonaqueous electrolyte secondary battery.

### 2. Related Art

In recent years, vehicles utilizing electric energy, such as electric vehicles and hybrid vehicles, have been put into practical use. Along with the development for the higher performance of such vehicles, the development for secondary batteries as the driving power source has been advanced. In particular, a nonaqueous electrolyte secondary battery such as a lithium ion secondary battery has been expected for its characteristics of high output, high capacity (high energy density), and long life.

The nonaqueous electrolyte secondary battery has been required to have small weight and thickness. More and more nonaqueous electrolyte secondary batteries have come to have a package formed of a laminate film instead of a metal can. The laminate film can have small weight and thickness and the processing of the laminate film is easy.

In the manufacture of the electrode of the nonaqueous electrolyte secondary battery, the use of an aqueous solvent instead of the conventionally used organic solvent has been examined from the viewpoints of reducing the manufacturing cost, the facility cost, the environmental burden, and the like. In the case of using the aqueous solvent, the binder for binding the active material with another active material and a current collector, and the binder appropriate for the aqueous solvent are used instead of the conventional binder suitably used for the organic solvent. For example, JP-A-2010-80297 discloses that polyvinyl alcohol and carboxymethyl cellulose are contained in the negative electrode together with a latex binder such as styrene butadiene rubber.

WO2014/142285 discloses the nonaqueous electrolyte secondary battery including the aqueous binder for the negative electrode and the laminate film as the package. The negative electrode of this nonaqueous electrolyte secondary battery includes coated natural graphite as the negative electrode active material. In addition, the positive electrode includes LiNi_{0.50}Mn_{0.30}Co_{0.20}O₂ as the positive electrode active material. Furthermore, styrene butadiene rubber is used as the aqueous binder and carboxymethyl cellulose is used for improving the applicability.

### SUMMARY

A nonaqueous electrolyte secondary battery according to the present embodiment includes: a positive electrode including a positive electrode current collector, and a positive electrode active material layer formed on the positive electrode current collector; a negative electrode including a negative electrode current collector, and a negative electrode active material layer formed on the negative electrode current collector; a separator disposed between the positive electrode and the negative electrode; and an electrolyte solution. The positive electrode active material layer includes a first positive electrode active material with a spinel structure, and a second positive electrode active material with a layered crystal structure, the negative electrode active material layer includes a negative electrode active material and an aqueous binder, and a mass ratio (A/B) of the first positive electrode active material (A) to the second positive electrode active material (B) is in a range of 70/30 to 95/5.

### BRIEF DESCRIPTION OF DRAWINGS

Fig. 1 is a perspective view illustrating a structure of a nonaqueous electrolyte secondary battery according to an embodiment of the present disclosure.
Fig. 2 is a sectional view illustrating a structure of a nonaqueous electrolyte secondary battery according to the embodiment of the present disclosure (sectional view taken along the line A-A of Fig. 1).

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

In use for the vehicles such as electric vehicles, for example, the nonaqueous electrolyte secondary battery is required to exhibit the excellent characteristics even under the low-temperature environment. An object of the present disclosure is to provide a nonaqueous electrolyte secondary battery with the improved low-temperature characteristics.

According to an aspect of the present disclosure, provided is a nonaqueous electrolyte secondary battery including: a positive electrode including a positive electrode current collector, and a positive electrode active material layer formed on the positive electrode current collector; a negative electrode including a negative electrode current collector, and a negative electrode active material layer formed on the negative electrode current collector; a separator disposed between the positive electrode and the negative electrode; and an electrolyte solution. The positive electrode active material layer includes a first positive electrode active material with a spinel structure, and a second positive electrode active material with a layered crystal structure; the negative electrode active material layer includes a negative electrode active material and an aqueous binder; and a mass ratio (A/B) of the first positive electrode active material (A) to the second positive electrode active material (B) is in a range of 70/30 to 95/5.

According to another aspect of the present disclosure, provided is a nonaqueous electrolyte secondary battery including: a positive electrode including a positive electrode current collector, and a positive electrode active material layer formed on the positive electrode current collector; a negative electrode including a negative electrode current collector, and a negative electrode active material layer formed on the negative electrode current collector; a separator disposed between the positive electrode and the negative electrode; and an electrolyte solution. The positive electrode active material layer includes a first positive electrode active material with a spinel structure, and a second positive electrode active material with a layered crystal structure; the negative electrode active material layer includes a negative electrode active material and an aqueous binder; and a thickness (Ta) of the positive electrode active material layer is larger than a thickness (Tb) of the negative electrode active material layer.

According to an embodiment of the present disclosure, a nonaqueous electrolyte secondary battery with the improved low-temperature characteristics can be provided.

A preferred embodiment of the present disclosure will be described below.

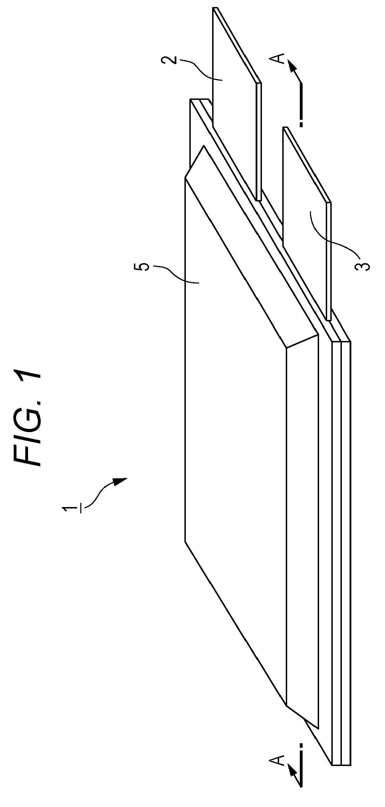

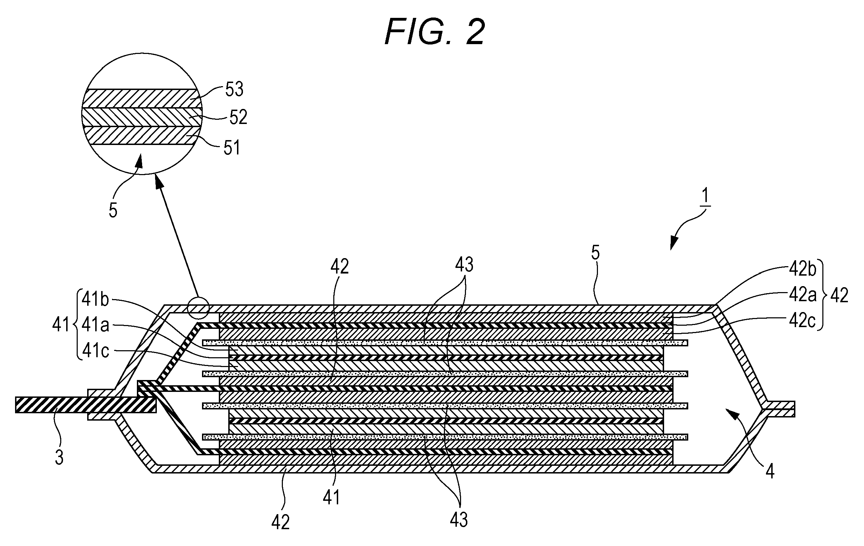

First, a structure of a nonaqueous electrolyte secondary battery according to the embodiment of the present disclosure is described with reference to the drawings. Here, an example of a lithium ion secondary battery is described. Fig. 1 is a perspective view of a battery 1, and Fig. 2 is a sectional view along the line A-A of Fig. 1.

As illustrated in Fig. 1, the battery 1 has a flat and rectangular parallelepiped external shape. A pair of terminals 2 and 3 protrudes from one edge of the battery 1 in a longitudinal direction.

As illustrated in Fig. 2, a power generating element 4 including positive electrode plates 41 and negative electrode plates 42, each plate 41 and each plate 42 being stacked with a separator 43 interposed therebetween, and an electrolyte solution are housed in an package container including a package 5. Specifically, the battery 1 includes three negative electrode plates 42, two positive electrode plates 41, and four separators 43 each interposed between the negative electrode plate 42 and the positive electrode plate 41. That is, in this example, the negative electrode plate 42 is located as each of two outermost layers of the power generating element 4. However, the power generating element may alternatively be configured so that the positive electrode plate 41 comes to the outermost layer of the power generating element 4. The size of each component in Figs. 1 and 2 may be exaggerated for the explanation.

The positive electrode plate 41 is obtained by forming a positive electrode active material layer 41b on one surface of a rectangular positive electrode current collector 41a, and a positive electrode active material layer 41c on the other surface of the rectangular positive electrode current collector 41a. Examples of the positive electrode current collector 41a include a positive electrode current collector formed of an electrochemically stable metal foil such as an aluminum foil, an aluminum alloy foil, a copper foil, or a nickel foil.

The negative electrode plate 42 is obtained by forming a negative electrode active material layer 42b on one surface of a rectangular negative electrode current collector 42a, and a negative electrode active material layer 42c on the other surface of the rectangular negative electrode current collector 42a. Examples of the negative electrode current collector 42a include a negative electrode current collector formed of an electrochemically stable metal foil such as a nickel foil, a copper foil, a stainless steel foil, or an iron foil.

A part of the edge of the negative electrode current collector 42a in the longitudinal direction extends as an extension part not having the negative electrode active material layer. An end of the extension part is bonded to a negative electrode terminal 3. Although not illustrated in Fig. 2, a part of the edge of the positive electrode current collector 41a in the longitudinal direction similarly extends as an extension part that does not have the positive electrode active material layer. An end of the extension part is bonded to a positive electrode terminal 2.

The thickness of each of the positive electrode current collector and the negative electrode current collector is usually set in the range of 1 to 100 µm.

The separator 43 prevents the short-circuiting between the positive electrode plate 41 and the negative electrode plate 42, and holds the electrolyte solution. Examples of the separator 43 that can be used include a microporous film formed of polyolefin such as polyethylene (PE) or polypropylene (PP). The separator 43 is not limited to a single layer film of polyolefin or the like. The separator may alternatively have a three-layer structure having a polypropylene film held between polyethylene films, or be formed by stacking a polyolefin microporous film and an inorganic microparticle porous film. The thickness of the separator can be set in the range of, for example, 4 to 60 µm.

The package 5 houses the power generating element 4 together with the electrolyte solution. The package 5 is formed by, for example, the laminate film as magnified in Fig. 2. This laminate film includes a metal layer 52 (for example, aluminum layer or the like), a heat-seal layer 51 with an insulating property that can be heat-sealed and that covers one surface of the metal layer (surface of the metal layer 52 on the side where the package 5 houses the power generating element 4), and a protective layer 53 that covers the other surface of the metal layer (outer surface of the package 5). The heat-seal layer 51 is formed of, for example, synthetic resin that can be heat-sealed, such as polypropylene. The protective layer 53 is formed of, for example, synthetic resin with excellent durability, such as polyethylene terephthalate (PET). The structure of the laminate film is not limited to the structure including the metal layer 52 and the synthetic resin layers 51 and 53 formed on the surface of the metal layer 52. For example, the structure of the package 5 may include the synthetic resin layer provided for only the side where the package 5 houses the power generating element 4.

The package 5 is formed by, for example, a laminate film disposed opposite to one major surface of the power generating element 4 illustrated in Fig. 2, and a laminate film disposed opposite to the other major surface thereof. Four sides of the two laminate films are overlapped on each other and heat-sealed, whereby a package container including the package 5 is formed. Note that the package container may alternatively be formed by disposing the power generating element 4 inside the two-folded laminate film, overlapping three sides of the laminate film on each other, and then heat-sealing the overlapped sides.

As illustrated in Fig. 1, a pair of terminals 2 and 3 positioned on the short side of the battery 1 is extracted to the outside through the bonding surface of the package 5 when the package 5 is heat-sealed. In Fig. 1, the pair of terminals 2 and 3 is disposed side by side on the same edge. Alternatively, the positive electrode terminal 2 may be disposed on one edge and the negative electrode terminal 3 may be disposed on the other edge.

The components of the secondary battery are hereinafter described in more detail.

### (Positive electrode active material layer)

The positive electrode active material layer includes the positive electrode active material and binder, and may further include a conductive agent and other additives.

The positive electrode active material includes a first positive electrode active material with a spinel structure (hereinafter also referred to as "positive electrode active material A") and a second positive electrode active material with a layered crystal structure (hereinafter also referred to as "positive electrode active material B"). The positive electrode active material other than the positive electrode active materials A and B may be included. The positive electrode active materials A and B may constitute a main component of the positive electrode active material. The total amount of the positive electrode active materials A and B is preferably 80 mass% or more, more preferably 90 mass% or more, and much more preferably 95 mass% or more.

The mass mixing ratio (A/B) of the positive electrode active material A to the positive electrode active material B is preferably in the range of 70/30 to 95/5, more preferably 75/25 to 95/5, and much more preferably 75/25 to 90/10. When the mixing ratio of the positive electrode active material A to the positive electrode active material B is in the above range, it becomes easier to obtain the desired capacity characteristics and low-temperature characteristics. From the viewpoint of the capacity characteristics, containing more positive electrode active material B is more advantageous. If the positive electrode active material B is contained over the above range, however, the effect of sufficiently improving the low-temperature characteristics cannot be attained. On the other hand, if more positive electrode active material A is contained, the advantageous effect based on the characteristics of the positive electrode active material A, such as the cost reduction of the material and the stability in the charged state, can be attained. In the case where the ratio of the capacity of the positive electrode active material to the capacity of the negative electrode active material layer is constant (under the condition that the area of the surface of the positive electrode active material layer opposite to the negative electrode is also constant), containing more positive electrode active material A with a relatively low capacity increases the thickness of the positive electrode active material layer. If the thickness of the positive electrode active material layer is increased relative to the thickness of the negative electrode active material layer, the ratio between the thickness of the positive electrode active material layer and the thickness of the negative electrode active material layer can contribute to the improvement of the low-temperature characteristics of the secondary battery as described below. The initial charging and discharging efficiency of the positive electrode active material layer is preferably 93 to 97%. When the content of the positive electrode active material A is less than the preferable mass mixing ratio (A/B), the initial charging and discharging efficiency of the positive electrode active material layer is possibly lower than the preferable range.

The positive electrode active material A is a lithium manganese composite oxide with a spinel structure (including a composite oxide whose Mn site is partly replaced by at least one kind of metallic elements and/or Li, other than Mn). The metallic element may be at least one kind selected from the group consisting of Mg, Al, Fe, Co, Ni, and Cu. For example, a composite oxide represented by Li_{1+b}Mn₂₋ₓMe1ₓO₄ (where Me1 is at least one kind of metallic elements and/or Li other than Mn, b satisfies 0 ≤ b < 0.2, and x satisfies 0 ≤ x < 2, preferably 0 ≤ x < 0.8) can be used. Me1 may be at least one kind selected from the group consisting of Mg, Al, Fe, Co, Ni, and Cu.

The positive electrode active material B is a lithium nickel composite oxide with a layered crystal structure (including a composite oxide whose nickel site is partly replaced by at least one kind of metallic element other than Ni). The metallic element may be at least one kind selected from the group consisting of Co, Mn, Mg, Al, Fe, Cr, Ti, and In. For example, a composite oxide represented by Li₁₊ₐ(Ni₁₋ₚMe2ₚ)O₂ (where Me2 is at least one kind of metallic element other than Ni, a satisfies -0.5 ≤ a < 0.2, and p satisfies 0 ≤ p < 1, preferably 0 ≤ p ≤ 0.6) can be used. Me2 may be at least one kind selected from the group consisting of Co, Mn, Mg, Al, Fe, Cr, Ti, and In.

The average particle diameter of the positive electrode active material is preferably 0.1 to 50 µm, more preferably 1 to 30 µm, and much more preferably 2 to 25 µm from the viewpoint of, for example, the reactivity with the electrolyte solution and the rate characteristics. The average particle diameter of the positive electrode active material A and the positive electrode active material B is preferably 0.1 to 50 µm, more preferably 1 to 30 µm, and much more preferably 2 to 25 µm. Here, the average particle diameter refers to the particle size (medium size: D₅₀) at the integrated value 50% in the particle size distribution (based on volume) according to the laser diffraction method.

Examples of the binder for the positive electrode to be used include binder generally used for the positive electrode, such as polytetrafluoroethylene (PTFE) and polyvinylidene fluoride (PVDF).

The binder is contained in the positive electrode active material layer by preferably 1 to 10 mass%, more preferably 1 to 5 mass%, and much more preferably 2 to 4 mass%. When the amount of binder contained is sufficient, the deterioration of the active material layer can be suppressed in the application for the vehicles or the like where the vibration resistance is required. If the amount of binder contained is excessive, the energy density is decreased and the resistance is increased, so that the transfer of lithium ions in the positive electrode active material layer may become difficult.

Examples of the conductive agent for the positive electrode active material layer to be used include conductive materials generally used as the conductive agent, for example, carbon materials such as carbon black, Ketjen black, and acetylene black. The amount of conductive agent in the positive electrode active material layer can be set in the range of, for example, 1 to 10 mass%.

Examples of other additives for the positive electrode active material layer include compounds for increasing the ion conductivity, such as conductive polymers, for example, polyethylene oxide polymer and polypropylene oxide polymer.

The thickness of the positive electrode active material layer on one side of the current collector is preferably 50 to 100 µm, more preferably 70 to 90 µm. The large thickness is advantageous in point of capacity. However, too large film thickness tends to be disadvantageous in point of input/output characteristics.

The film density of the positive electrode active material layer is set in the range of preferably 2.8 to 3.1 g/cm³, more preferably 2.8 to 3.0 g/cm³ or 2.9 to 3.1 g/cm³, and much more preferably 2.9 to 3.0 g/cm³. The large film density is advantageous in point of capacity. However, too large film density tends to be disadvantageous in point of input/output characteristics. The porosity of the positive electrode active material layer is preferably 20 to 30%. The large porosity is advantageous in point of input/output characteristics. However, too large film porosity leads to the low capacity.

The positive electrode active material layer can be formed as below, for example. First, a slurry including the positive electrode active material, the binder, and the solvent (and conductive agent, if necessary) is prepared. The slurry is applied onto the positive electrode current collector. The applied slurry is dried and pressed if necessary, thereby forming the positive electrode active material layer. The slurry solvent used in the manufacture of the positive electrode may be N-methyl-2-pyrrolidone (NMP).

### (Negative electrode active material layer)

The negative electrode active material layer includes the positive electrode active material and the aqueous binder, and may further include the conductive agent and other additives.

As the negative electrode active material, a graphite material is contained. Examples of the graphite material include natural graphite, synthetic graphite, and coated graphite. Other examples of the negative electrode active material include amorphous carbon such as a non-graphitizable carbon material and a graphitizable carbon material, carbonaceous materials such as diamond-like carbon, fullerene, carbon nanotube, and carbon nanohorn, a metal that can form alloy with lithium, an oxide containing such metal, and a lithium-metal composite oxide. The content ratio of the graphite material relative to the entire negative electrode active material is preferably 90 mass% or more (90 to 100 mass%), more preferably 95 mass% or more (95 to 100 mass%), much more preferably 98 mass% or more (98 to 100 mass%), and particularly preferably 100 mass%.

In order to suppress the decrease in charging and discharging efficiency by suppressing the side reaction, the average particle diameter of the negative electrode active material is preferably 1 µm or more, more preferably 2 µm or more, and much more preferably 5 µm or more. Moreover, the average particle diameter is preferably 80 µm or less, more preferably 40 µm or less, from the perspectives of the input/output characteristics and the manufacture of the electrode (flatness of the electrode surface, etc.). Here, the average particle diameter refers to the particle size (medium size: D₅₀) at the integrated value 50% in the particle size distribution (based on volume) according to the laser diffraction method.

The graphite material is preferably coated graphite because the excellent input/output characteristics can be obtained and the gas generation can be suppressed. Moreover, the graphite material that is preferable from the viewpoints of capacity and cost is coated natural graphite including natural graphite as the core material.

The coated graphite is the graphite material obtained by coating the surface of the graphite particle with the amorphous or low-crystalline non-graphite carbon material. As long as the desired characteristics can be obtained, it is not necessary that the surface of the graphite particle is entirely coated and at least a part of the graphite particle may be coated. The amount of coating is preferably 10 vol% or less, more preferably 5 vol% or less, and much more preferably 2 vol% or less relative to the volume of the entire coated graphite.

The negative electrode active material may be the negative electrode active material obtained by mixing, for example, the coated graphite and the uncoated graphite. The content ratio of the coated graphite material relative to the entire negative electrode active material is preferably 60 vol% or more (60 to 100 mass%), more preferably 70 vol% or more (70 to 100 mass%), and much more preferably 80 vol% or more (80 to 100 mass%).

The graphite particles are preferably spherical graphite from the aspect of the capacity density and the spherical graphite can easily form the slurry in the preparation of the negative electrode active material layer. From the viewpoint of the material cost, the graphite particles are more preferably spherical natural graphite.

The circularity of the spherical graphite is preferably 0.8 or more, more preferably 0.85 or more, and much more preferably 0.9 or more. The circularity can be obtained by observing the particle image with SEM (Scanning Electron Microscope) and then analyzing the obtained image. In the image analysis, the circularity is defined as L/1, where L represents the circumferential length (length of the circumference of the equivalent circle) calculated from the diameter (diameter of the equivalent circle) of the circle (equivalent circle) with the same area as the projected image of the graphite particles on the plane, and 1 represents the actual circumferential length.

The coated graphite coated with a non-graphite carbon layer can be obtained by, for example, attaching the amorphous or low-crystalline non-graphite carbon material to the surface of the graphite particle. For example, the surface of the graphite particle is coated with melted pitch and then the coated graphite particles are burned at 500 to 2000°C, so that the pitch is carbonized. Finally, the obtained burned product is pulverized and classified, so that the targeted coated graphite is obtained.

Examples of other methods for forming the non-graphite carbon layer include a wet mixing method, a chemical vapor deposition method, and a mechanochemical method. Examples of the carbon source used in the chemical vapor deposition method include hydrocarbon (aliphatic, aromatic, or alicyclic) such as methane, ethane, propane, benzene, toluene, xylene, styrene, naphthalene, and derivatives thereof. The carbon source used for the wet mixing method and the mechanochemical method may be a solid product or a dissolved product of a carbonizable material such as a polymer compound (for example, phenol resin or styrene resin) or pitch. The processing temperature can be set to 800 to 1200°C in the chemical vapor deposition method, and to 700 to 2000°C in the wet mixing method and the mechanochemical method.

The amount of coating of the coated graphite is determined so that, preferably, the initial charging and discharging efficiency of the secondary battery including the coated graphite is 90 to 98%. The amount of coating is more preferably 93 to 97%. If the amount of coating is too large, the initial charging and discharging efficiency is reduced. Too low initial charging and discharging efficiency is not preferable because the discharging capacity becomes small. On the other hand, if the amount of coating is too small, the initial charging and discharging efficiency is increased but it becomes difficult to achieve the improvement in the input/output characteristics by the coating of the graphite particles. When an appropriate amount of non-graphite carbon layer is formed on the surface of the graphite particle, the entry and exit of lithium ions through the active material particles are facilitated even at low temperatures, so that the low-temperature characteristics can be improved suitably.

The initial charging and discharging are carried out in a manner that voltage is applied to the manufactured battery and then charging and discharging including at least the initial charging are performed under a predetermined condition. On this occasion, a film can be formed by reducing and decomposing the component contained in the electrolyte solution on the surface of the negative electrode active material particle.

The amount of coating can be calculated in a manner that the residual ratio of the carbon source is determined in advance through the thermogravimetric analysis or the like and the product of the residual ratio and the amount of carbon source used in the manufacture is obtained.

The aqueous binder is the binder that can be dissolved in or dispersed with water. Examples of the aqueous binder include thermoplastic resin, polymer compounds with rubber elasticity (rubber polymer), and water-soluble polymers. Two or more kinds thereof may be mixed to be used. Examples of the binder that can be dispersed with water include polymer compounds emulsified in latex, emulsion, or water and polymer compounds suspended in water.

In regard to the aqueous binder, the water used as the solvent in the formation of the negative electrode active material layer is inexpensive and handling the aqueous binder is easy. Moreover, the aqueous binder has other advantages of lower cost for the manufacture facilities and lower environmental burden.

Specific examples of the aqueous binder include the following compounds.
styrene-based polymer compound/rubber polymer (polystyrene, styrene-butadiene rubber, styrene-vinyl acetate copolymer, styrene-acrylic copolymer, etc.)
butadiene-based polymer compound/rubber polymer (acrylonitrile-butadiene rubber, methylmethacrylate-butadiene rubber, styrene-butadiene rubber, polybutadiene, etc.)
(meth)acrylic polymer compound/rubber polymer (polymethylmethacrylate (methylmethacrylate rubber), polyethylacrylate, polyethylmethacrylate, polypropylacrylate, polypropylmethacrylate, polyisopropylacrylate, polyisopropylmethacrylate, polybutylacrylate, polybutylmethacrylate, polyhexylacrylate, polyhexylmethacrylate, polyethylhexylacrylate, polyethylhexylmethacrylate, polylaurylacrylate, polylaurylmethacrylate, etc.)
ethylene and/or propylene polymer (polytetrafluoroethylene, polyethylene, polypropylene, ethylene-propylene copolymer)
butyl rubber, fluorine rubber
polyethylene oxide, polyepichlorohydrin, polyphosphazene, polyacrylonitrile
ethylene-propylene-diene copolymer, polyvinylpyridine, chlorosulfonized polyethylene
polyester resin, phenol resin, epoxy resin

The water-soluble polymer may be any of the following compounds:
polyvinyl alcohol (average polymerization degree: preferably 200 to 4000, more preferably 1000 to 3000, saponification degree: preferably 80 mol% or more, more preferably 90 mol% or more), a modified body thereof (for example, a product obtained by saponifying 1 to 80 mol% of vinyl acetate units of the copolymer containing ethylene and vinylacetate at ethylene/vinylacetate = 2/98 to 30/70, or a product obtained by acetalizing 1 to 50 mol% of polyvinyl alcohol)
starch and its modified body (starch oxide, phosphorylated starch, cationized starch)
cellulose derivatives (carboxymethyl cellulose, methyl cellulose, hydroxypropyl cellulose, hydroxyethyl cellulose, and salts thereof)
polyvinylpyrrolidone, polyacrylic acid (or salt thereof), polyethylene glycol

Other water-soluble polymers may be the following compounds:
(meth)acrylic amide and/or (meth)acrylic acid salt copolymer ((meth)acrylic amide polymer, (meth)acrylic amide-(meth)acrylic acid salt copolymer, (meth)acrylic acid alkyl (carbon number of 1 to 4)-methacrylic acid salt copolymer
styrene-maleic acid copolymer, Mannich modified body of polyacrylic amide, formalin condensed resin (urine-formalin resin, melamine-formalin resin, etc.), polyamide polyamine, dialkylamine-epichlorohydrin copolymer, polyethylene imine, casein, soybean protein, synthesis protein, and mannan galactan derivative.

The aqueous binder preferably contains the rubber polymer from the aspect of the binding property. The rubber polymer is preferably butadiene rubber polymer or (meth)acrylic rubber polymer, more preferably styrene-butadiene rubber, acrylonitrile-butadiene rubber, methacrylic acid methyl-butadiene rubber, or methylmethacrylate rubber, and particularly preferably styrene-butadiene rubber.

In the case where the aqueous binder includes the rubber polymer, the water-soluble polymer is preferably used additionally in order to improve the applicability. Examples of the water-soluble polymer include polyvinyl alcohol and a modified body thereof, starch and a modified body thereof, a cellulose derivative, polyvinylpyrrolidone, polyacrylic acid and salts thereof, and polyethylene glycol. Among these, the cellulose derivative is preferable, and carboxymethyl cellulose is more preferable.

If the water-soluble polymer and the rubber polymer are used in combination, the mass mixing ratio (rubber polymer/water-soluble polymer) is preferably 0.3/1 to 3/1, more preferably 1/1 to 3/1, and much more preferably 1.1/1 to 2.5/1.

The amount of binder contained in the negative electrode active material (if the water-soluble polymer and the rubber polymer are used in combination, the total amount thereof) is preferably 1 to 10 mass%, more preferably 1 to 5 mass%, much more preferably 2 to 5 mass%, and particularly preferably 2.5 to 3.5 mass% relative to the entire mass of the negative electrode active material layer. When the binder is thusly contained in relatively large amount, the deterioration of the active material layer can be suppressed in the application for the vehicles and the like where the vibration resistance is required. However, containing too much binder makes it difficult for lithium ions to transfer, and accordingly the desired low-temperature characteristics are obtained less easily.

The conductive agent for the negative electrode active material layer may be the conductive material that is generally used as the conductive agent, such as carbon materials including carbon black, Ketjen black, and acetylene black. The amount of conductive agent in the negative electrode active material layer can be set to, for example, 1 to 10 mass%.

Examples of other additives for the negative electrode active material layer include compounds for increasing the ion conductivity, such as conductive polymer typified by polyethylene oxide polymer and polypropylene oxide polymer.

The thickness of the negative electrode active material layer on one side of the current collector is preferably 40 to 80 µm, more preferably 50 to 70 µm. The large thickness is advantageous in point of capacity. On the other hand, the film thickness exceeding the above range is disadvantageous in point of the input/output characteristics.

The film density of the negative electrode active material layer is set in the range of preferably 1.2 to 1.7 g/cm³, more preferably 1.3 to 1.6 g/cm³ or 1.2 to 1.5 g/cm³, and much more preferably 1.3 to 1.5 g/cm³. The large film density is advantageous in point of capacity. However, too large film density exceeding the above range is disadvantageous in point of input/output characteristics. The porosity of the negative electrode active material layer is preferably 25 to 37%. When the porosity is too small, it is difficult for lithium ions to transfer, and accordingly the desired low-temperature characteristics are obtained less easily. When the porosity is too large, the capacity is reduced.

The negative electrode active material layer can be formed as below, for example. First, a slurry including the negative electrode active material, the aqueous binder, and water is prepared. The slurry is applied onto the negative electrode current collector. The applied slurry is dried and pressed as necessary, thereby forming the negative electrode. The negative electrode can alternatively be formed by forming the negative electrode active material layer in advance and then forming a thin film to serve as the current collector by a vapor deposition method, a CVD method, a sputtering method, or the like.

### (Relation between thickness of positive electrode active material layer and thickness of negative electrode active material layer)

In the secondary battery according to the embodiment of the present disclosure, the positive electrode active material layer and the negative electrode active material layer are disposed opposite to each other with the separator interposed therebetween. The thickness of the positive electrode active material layer is preferably larger than the thickness of the negative electrode active material layer. The thickness ratio (positive electrode active material layer/negative electrode active material layer) is preferably 1.1 to 1.4, more preferably 1.15 to 1.35, and much more preferably 1.2 to 1.32. It is advantageous that the positive electrode active material layer including the positive electrode active material A and the positive electrode active material B is sufficiently thicker than the negative electrode active material layer because the low-temperature characteristics can be improved as shown in Examples below. On the other hand, it is disadvantageous that the positive electrode active material layer is too thick in point of the capacity and the input/output characteristics.

### (Relation between capacity of positive electrode active material layer and capacity of negative electrode active material layer)

The ratio (C_{A}/C_{C}) of the charging capacity C_{A} per unit area of the negative electrode active material layer to the charging capacity C_{C} per unit area of the positive electrode active material layer between a pair of opposite positive electrode active material layer and negative electrode active material layer is preferably 1 or more, more preferably 1.1 or more from the viewpoint of preventing the separation of lithium. On the other hand, from the viewpoint of reducing the excessive negative electrode active material, the preferable ratio is 1.3 or less. Here, the unit area includes the unit area of the surface of the positive electrode active material layer opposite to the negative electrode active material layer, and the unit area of the surface of the negative electrode active material opposite to the positive electrode active material.

The charging capacity C_{C} per unit area of the positive electrode active material layer and the charging capacity C_{A} per unit area of the negative electrode active material layer can be measured based on a general method using a coin cell.

### (Relation between area of positive electrode active material layer and area of negative electrode active material layer)

Of the pair of opposite positive electrode active material layer and negative electrode active material layer, the area of the positive electrode active material layer is represented by S_{C} (area of the surface F_{C} opposite to the negative electrode active material layer), and the area of the negative electrode active material layer is represented by S_{A} (area of the surface F_{A} opposite to the positive electrode active material layer). In order to prevent the separation of lithium, the area S_{A} of the negative electrode active material layer is preferably set larger than the area S_{C} of the positive electrode active material layer. On the other hand, if these areas are different largely, a larger part of the active material layer does not contribute to the capacity and output of the battery. In view of this, when the positive electrode and the negative electrode are overlapped, the displacement width between the outer peripheral edge of the positive electrode active material layer and the outer peripheral edge of the negative electrode active material layer is preferably 4 mm or less, more preferably 3 mm or less, and much more preferably 2.5 mm or less. The "displacement width" herein refers to the length of the shortest line connecting between the outer peripheral edge of the positive electrode active material layer and the outer peripheral edge of the negative electrode active material layer. If the surface F_{C} and the surface F_{A} are rectangular in shape, the displacement width corresponds to the length of the shortest line connecting between the outer peripheral side of the positive electrode active material layer and the outer peripheral side of the negative electrode active material layer (except the line connecting between the corners of the rectangle). The area ratio (S_{A}/S_{C}) is preferably in the range of 1.01 to 1.07, more preferably 1.02 to 1.05.

### (Electrolyte solution)

A preferred example of the electrolyte solution to be used for the secondary battery according to the embodiment of the present disclosure is a nonaqueous electrolyte solution obtained by dissolving the lithium salt in an organic solvent.

As the organic solvent, the combination of cyclic carbonate and chained carbonate is preferably used. Examples of the cyclic carbonate include ethylene carbonate, propylene carbonate, and fluoroethylene carbonate. Examples of the chained carbonate include dimethyl carbonate, diethyl carbonate, and ethylmethyl carbonate. The mixing ratio of the cyclic carbonate to the chained carbonate (cyclic carbonate/chained carbonate) is preferably 1/9 to 4/6, more preferably 1/9 to 3/7, much more preferably 2/8 to 4/6, and particularly preferably 2/8 to 3/7 in volume ratio. The mixing ratio set within this range can contribute to the improvement of the low-temperature characteristics as shown in the evaluation results in Examples below.

In addition to the cyclic carbonate and the chained carbonate, the nonaqueous electrolyte solution may contain other organic solvents (such as carboxylic acid esters, ethers, and other aprotic organic solvents). However, the total amount of cyclic carbonate and chained carbonate is preferably 80 vol% or more (80 to 100 vol%), more preferably 90 vol% or more (90 to 100 vol%) relative to the entire organic solvent.

Examples of the lithium salt include LiPF₆, LiBF₄, LiCF₃SO₃, LiC₄F₉SO₃, LiN(CF₃SO₂)₂, and LiC(CF₃SO₂)₃. The concentration of the lithium salt is set to 0.8 to 1.2 mol/L, preferably 0.9 to 1.1 mol/L. The sufficiently high concentration of lithium salt is advantageous in improving the low-temperature characteristics. If the concentration of lithium salt is too high over the above range, however, the viscosity of the electrolyte solution tends to increase. In order to secure the permeability into the pores of the positive electrode and the negative electrode, the lithium salt concentration is preferably set within the above range.

The electrolyte solution may contain an additive. The additive can preferably form a film derived from the additive on the surface of the negative electrode active material. Examples of the additive include carbonate additives such as vinylene carbonate (VC), 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinylethylene carbonate (VEC), divinylethylene carbonate and other carbonates with the unsaturated bond, and halogenated carbonates whose hydrogen atoms are partly replaced by fluorine atoms such as ethylene carbonate and propylene carbonate. Other examples include sulfur additives such as sultone, for example propane sultone, chained or cyclic sulfonic acid ester, and chained or cyclic disulfonic acid ester. Among these, preferred examples are vinylene carbonate, vinylethylene carbonate, divinylethylene carbonate, sultone, cyclic sulfonic acid ester, cyclic disulfonic acid ester, and fluoroethylene carbonate. Any of these additives may be used alone, or two or more kinds thereof may be used in combination. The additive preferably contains at least the sulfur additive as a necessary component. The concentration of additive in the electrolyte solution is preferably 0.1 mass% to 5 mass%, preferably 0.5 to 2.5 mass%. These additives can contribute to the improvement of the cycle characteristics. However, if the additive is contained too much, the increase in DC resistance may be concerned.

### [Examples]

### (Example 1)

The positive electrode was manufactured through the procedure below. The powder of a lithium manganese composite oxide (Li_{1.1}Mn_{1.9}O₄, whose Mn site has been replaced by a small amount of Mg and Al) with a spinel structure (hereinafter this powder is referred to as "LiMnO", having an average particle size (D₅₀) of 10 µm) as the positive electrode active material A, and the powder of a lithium nickel composite oxide (LiNi_{0.8}Co_{0.1}Mn_{0.1}O₂) with a layered crystal structure (hereinafter this powder is referred to as "LiNiO", having an average particle size (D₅₀) of 12 µm) as the positive electrode active material B were mixed at a mass ratio (LiMnO/LiNiO) = 80/20. To this positive electrode active material, polyvinylidene fluoride as the binder and carbon black powder as the conductive agent were added at a predetermined proportion. This mixture was dispersed uniformly in the solvent N-methyl-2-pyrrolidone (NMP), thereby preparing a slurry. The obtained slurry was applied on a 20-µm-thick aluminum foil as a positive electrode current collector. After that, NMP was vaporized to form the positive electrode active material layer on one surface of the positive electrode current collector. The binder was contained in the positive electrode active material layer (layer formed on one surface of the current collector) by 4 mass%. Similarly, the positive electrode active material layer was formed on the other surface of the positive electrode current collector. After that, the positive electrode active material layer was pressed, thereby providing the targeted positive electrode plate. The thickness of the pressed positive electrode active material layer was 81 µm (thickness on one surface side), the film density thereof was 2.96 (g/cm³), and the porosity thereof was 24%.

The negative electrode was manufactured through the procedure below. The powder of spherical natural graphite coated with the amorphous carbon (charging and discharging efficiency: 95%, average particle size D₅₀: 18 µm) as the negative electrode active material, the carbon black as the conductive agent, and styrene butadiene rubber (SBR) and carboxymethyl cellulose (CMC) as the binder were prepared. These were uniformly dispersed at a predetermined proportion in a CMC aqueous solution, thereby preparing a slurry. The obtained slurry was applied to a 10-µm-thick copper foil as the negative electrode current collector. After that, water was vaporized to form the negative electrode active material layer on one surface of the negative electrode current collector. Similarly, the negative electrode active material layer was formed on the other surface of the negative electrode current collector. After that, the negative electrode active material layer was pressed, thereby providing the targeted negative electrode plate. The thickness of the pressed negative electrode active material layer was 66 µm (thickness on one surface side). SBR and CMC were contained in the negative electrode active material layer by 2 mass% and 1 mass%, respectively.

The thicknesses of the positive and negative electrodes were designed so that the ratio (C_{A}/C_{C}) of the charging capacity C_{A} per unit area of the negative electrode plate to the charging capacity C_{C} per unit area of the positive electrode plate became 1.2. The charging capacity was obtained by measuring the initial charging capacity at a rate of 0.05 C using a coil cell with a counter electrode formed of lithium metal. In Examples 2 to 5 and Comparative Example 1, the thicknesses of the positive and negative electrodes were designed to have a ratio C_{A}/C_{C} of 1.2 so that the relation between the positive electrode capacity and the negative electrode capacity became equal to enable the comparison of the measurement results.

The positive electrode plate and the negative electrode plate were cut, while leaving the current collector extension parts where the active material was not applied. Thus, the positive electrode plate and the negative electrode plate with a predetermined size were obtained.

Next, the positive electrode plates (17 plates), the negative electrode plates (18 plates), and the separators formed of polyethylene and polypropylene were alternately stacked so that the positive electrode active material layer and the negative electrode active material layer were disposed opposite to each other and overlapped on each other. Thus, the power generating element was obtained.

Next, an inward end (one end portion) of the negative electrode terminal was bonded to the extension part of the negative electrode current collector of the negative electrode plate. Similarly, an inward end (one end portion) of the positive electrode terminal was bonded to the extension part of the positive electrode current collector of the positive electrode plate. This power generating element was covered with the laminate film constituting the package. Next, four sides around the package were heat-sealed leaving a relatively small filling port. Thus, the package container including the power generating element was formed. After that, the electrolyte solution described below was poured through the filling port and then the pressure in the package container was reduced. After that, the filling port was heat-sealed, thereby hermetically sealing the package container. The laminate film was heat-sealed in a state that the positive electrode terminal and the negative electrode terminal were extracted from one of the four sides of the package container. The distance between the heat-sealed portion and the power generating element was 15 mm at the side where the terminals were extracted and 5 mm at the other sides.

As the electrolyte solution, the solution containing 1 mol/L of LiPF₆ as the electrolyte salt, the mixed solvent of ethylene carbonate and diethyl carbonate (volume ratio 30:70, cyclic carbonate/chained carbonate = 30/70) as the solvent, and 1 mass% of vinylene carbonate and 1 mass% of cyclic disulfonic acid ester as the additive was used.

### (Example 2)

The battery was manufactured through the same procedure as that in Example 1 except that the mixing ratio (mass ratio) of the positive electrode active materials, the thickness of the positive electrode active material layer, and the thickness of the negative electrode active material layer were set in accordance with Table 1, and that the positive electrode film density was re-adjusted so that the positive electrode porosity became 24%.

### (Example 3)

The battery was manufactured through the same procedure as that in Example 1 except that the mixing ratio (volume ratio) of ethylene carbonate and diethyl carbonate was set to 40:60 (cyclic carbonate/chained carbonate = 40/60).

### (Example 4)

The battery was manufactured through the same procedure as that in Example 1 except that the mixing ratio (volume ratio) of ethylene carbonate and diethyl carbonate was set to 20:80 (cyclic carbonate/chained carbonate = 20/80).

### (Example 5)

The battery was manufactured through the same procedure as that in Example 1 except that the mixing ratio (mass ratio) of the positive electrode active materials, the thickness of the positive electrode active material layer, and the thickness of the negative electrode active material layer were set in accordance with Table 1, and that the positive electrode film density was re-adjusted so that the positive electrode porosity became 24%.

### (Comparative Example 1)

The battery was manufactured through the same procedure as that in Example 1 except that the mixing ratio (mass ratio) of the positive electrode active materials, the thickness of the positive electrode active material layer, and the thickness of the negative electrode active material layer were set in accordance with Table 1, and that the positive electrode film density was re-adjusted so that the positive electrode porosity became 24%.

### (Capacity retention)

In a thermostat chamber with a temperature maintained at 10°C, the temperature of the battery was set to 10°C and then the battery was charged with constant current (CC) up to 4.15 V at a current rate of 1 C or 0.2 C. After that, the battery was charged at constant voltage (CV) for 2.5 hours in total. After a rest for 10 minutes, the battery was discharged to 3.0 V at a current rate of 1 C or 0.2 C and then rested again for 10 minutes. This is considered as one cycle in the charging and discharging test. The discharging capacity after 1000 cycles relative to the initial discharging capacity is defined as the capacity retention (%). The capacity retention was obtained through the charging and discharging test as above with respect to the batteries in Examples and Comparative Example. The results are shown in Table 1.

### (Increase rate of internal DC resistance (DCR))

The internal DC resistance (DCR: direct current resistance) of the initial battery was measured as below. The battery, which was charged by just 10% of the battery capacity (charged state: 10%), was discharged at a current rate of 1C, 2C, or 3C. The current value of this discharged battery and the voltage thereof after 10 seconds from the discharging were recorded. The measurement records are plotted in the graph expressing the recorded current (A) horizontally and the recorded voltage (V) vertically. The DCR value (Ω) was obtained from the inclination of the plots (voltage change quantity/current change quantity). The DCR was measured at 25°C and -30°C, and the ratio of the DCR value at -30°C to the DCR value at 25°C (DCR value at -30°C/DCR value at 25°C) was determined as the DCR increase rate. The internal DC resistance of the batteries according to Examples and Comparative Example was measured as above, and thus the DCR increase rate was obtained. The results are shown in Table 1.

**[Table 1]**

| | Positive electrode active material mixing ratio (A/B) | Thickness of positive electrode active material layer (µm) | Thickness of negative electrode active material layer (µm) | Solvent mixing ratio (cyclic/ chained) | Capacity retention (%) 10°C, after 1000 cycles | | DCR increase rate -30°C/25°C |
|---|---|---|---|---|---|---|---|
| | | | | | 1C | 0.2C | |
| Example 1 | 80/20 | 81 | 66 | 30/70 | 85 | 90 | 25 |
| Example 2 | 78/22 | 73 | 61 | 30/70 | 85 | 90 | 26 |
| Example 3 | 80/20 | 81 | 66 | 40/60 | 82 | 87 | 30 |
| Example 4 | 80/20 | 81 | 66 | 20/80 | 86 | 91 | 24 |
| Example 5 | 90/10 | 83 | 63 | 30/70 | 81 | 89 | 23 |
| Comparative Example 1 | 30/70 | 61 | 62 | 30/70 | 64 | 85 | 33 |

As is clear from the comparisons between Examples 1 to 5 and Comparative Example 1, the capacity retention is remarkably low and the DCR increase rate is high if the positive electrode active material B is contained by more than 30% (or the positive electrode active material layer is thinner than the negative electrode active material layer) (in Comparative Example 1). Moreover, it is understood that if the positive electrode active material B is contained in relatively small amount (in Example 5 in comparison to Example 1), the capacity retention at 1 C is low as compared to Example 1. As indicated by Comparative Example 1, the secondary battery including the negative electrode active material layer containing the aqueous binder and the graphite active material may have a problem of the decrease in low-temperature characteristics. However, as indicated by the evaluation results in Examples, it is understood that the low-temperature characteristics can be improved by setting the mixing ratio between the positive electrode active materials A and B within the aforementioned preferable range (or setting the relation between the thickness of the positive electrode active material layer and the thickness of the negative electrode active material layer within the preferable range by controlling the mixing ratio between the positive electrode active materials A and B to increase the thickness of the positive electrode active material layer).

The reason why the above effect can be obtained is not clear, but the following may be assumed. Forming the positive electrode active material layer that is sufficiently thicker than the negative electrode active material layer provides the effect that the lithium ions are sufficiently intercalated in the positive electrode active material even if the discharging current is large under low temperatures. When the positive electrode active material layer is designed, increasing the ratio of the active material with the low capacity density while maintaining the capacity constant makes the layer thicker. Of the positive electrode active material layers with the same capacity, the thicker positive electrode active material layer contains more positive electrode active material particles. Therefore, it is supposed that the lithium ion intercalation phenomenon in the discharging is observed dispersedly in a spatially wide region and as a result, this can improve the low-temperature characteristics.

When the solvent of the electrolyte solution contains a little larger amount of cyclic compounds with relatively high viscosity (Example 3), the capacity retention is lower and the DCR increase rate is higher than those when the solvent contains a little smaller amount of cyclic compounds (Example 1, etc.). In this manner, the effect of improving the low-temperature characteristics of the battery varies depending on the composition of the solvent of the electrolyte solution. In view of this, the composition of the solvent of the electrolyte solution is preferably set within the aforementioned preferable particular range in order to obtain the excellent low-temperature characteristics.

In any of Examples 1 to 5 and Comparative Example 1, a large amount of aqueous binder is contained in the negative electrode for the purpose of suppressing the deterioration of the active material layer even in the application for the vehicles and the like where the vibration resistance is required. The decrease in low-temperature characteristics as indicated by Comparative Example 1 is more remarkable when the aqueous binder is used in a little larger amount. "A little larger amount" herein refers to, for example, an amount of 2 mass% or more relative to the entire mass of the negative electrode active material layer. According to the embodiment of the present disclosure, using a sufficient amount of aqueous binder can improve the durability of the negative electrode (such as the adhesion strength of the active material layer to the current collector, and the binding power between the particles in the active material layer), and therefore provide the secondary battery with the excellent low-temperature characteristics.

In any of Examples 1 to 5 and Comparative Example 1, the electrode is not the wound type but the stacked type. The decrease in low-temperature characteristics as indicated by Comparative Example 1 is remarkable in the stacked type electrode as compared to the wound type electrode. This is because the stacked type electrode has higher heat dissipation, so that the temperature of the battery is not easily increased when large current is fed. According to the embodiment of the present disclosure, the secondary battery having the stacked type electrode, which is advantageous in thinning the battery, and the excellent low-temperature characteristics can be provided.

The nonaqueous electrolyte secondary battery according to the embodiment of the present disclosure may be any of the following first to fourteenth nonaqueous electrolyte secondary batteries.

The first nonaqueous electrolyte secondary battery includes: a positive electrode including a positive electrode current collector, and a positive electrode active material layer formed on the positive electrode current collector; a negative electrode including a negative electrode current collector, and a negative electrode active material layer formed on the negative electrode current collector; a separator disposed between the positive electrode and the negative electrode; and an electrolyte solution, wherein: the positive electrode active material layer includes a first positive electrode active material with a spinel structure, and a second positive electrode active material with a layered crystal structure; the negative electrode active material layer includes a graphite material as a negative electrode active material, and an aqueous binder; and the mass ratio (A/B) of the first positive electrode active material (A) to the second positive electrode active material (B) is in a range of 70/30 to 95/5.

The second nonaqueous electrolyte secondary battery includes: a positive electrode including a positive electrode current collector, and a positive electrode active material layer formed on the positive electrode current collector; a negative electrode including a negative electrode current collector, and a negative electrode active material layer formed on the negative electrode current collector; a separator disposed between the positive electrode and the negative electrode; and an electrolyte solution, wherein: the positive electrode active material layer includes a first positive electrode active material with a spinel structure, and a second positive electrode active material with a layered crystal structure; the negative electrode active material layer includes a graphite material as a negative electrode active material, and an aqueous binder; and the thickness (Ta) of the positive electrode active material layer is larger than the thickness (Tb) of the negative electrode active material layer.

The third nonaqueous electrolyte secondary battery is the first nonaqueous electrolyte secondary battery, wherein the thickness (Ta) of the positive electrode active material layer is larger than the thickness (Tb) of the negative electrode active material layer.

The fourth nonaqueous electrolyte secondary battery is the first or third nonaqueous electrolyte secondary battery, wherein the mass ratio (A/B) of the first positive electrode active material (A) to the second positive electrode active material (B) is in a range of 75/25 to 95/5.

The fifth nonaqueous electrolyte secondary battery is any of the first to fourth nonaqueous electrolyte secondary batteries, wherein the aqueous binder includes a rubber polymer and a water-soluble polymer.

The sixth nonaqueous electrolyte secondary battery is the fifth nonaqueous electrolyte secondary battery, wherein the content ratio (mass ratio) of the rubber polymer is more than or equal to the content ratio of the water-soluble polymer.

The seventh nonaqueous electrolyte secondary battery is the fifth or sixth nonaqueous electrolyte secondary battery, wherein the water-soluble polymer includes carboxymethyl cellulose.

The eighth nonaqueous electrolyte secondary battery is any of the fifth to seventh nonaqueous electrolyte secondary batteries, wherein at least one kind selected from the group consisting of styrene-butadiene rubber, acrylonitrile-butadiene rubber, methylmethacrylate-butadiene rubber, and methylmethacrylate rubber is included as the rubber polymer.

The ninth nonaqueous electrolyte secondary battery is any of the fifth to seventh nonaqueous electrolyte secondary batteries, wherein styrene-butadiene rubber is included as the rubber polymer.

The tenth nonaqueous electrolyte secondary battery is any of the first to ninth nonaqueous electrolyte secondary batteries, wherein the aqueous binder is contained by 1 to 10 mass% in the negative electrode active material layer.

The eleventh nonaqueous electrolyte secondary battery is any of the first to tenth nonaqueous electrolyte secondary batteries, wherein the negative electrode active material layer includes coated graphite as the graphite material.

The twelfth nonaqueous electrolyte secondary battery is any of the first to eleventh nonaqueous electrolyte secondary batteries, wherein the electrolyte solution includes cyclic carbonate and chained carbonate, and a volume mixing ratio (cyclic carbonate/chained carbonate) is in a range of 1/9 to 4/6.

The thirteenth nonaqueous electrolyte secondary battery is any of the first to twelfth nonaqueous electrolyte secondary batteries, wherein a ratio (C_{A}/C_{C}) of a charging capacity C_{A} per unit area of the negative electrode active material layer to a charging capacity C_{C} per unit area of the positive electrode active material layer is in a range of 1 to 1.3.

The fourteenth nonaqueous electrolyte secondary battery is any of the first to thirteenth nonaqueous electrolyte secondary batteries, wherein: a positive electrode flat plate as the positive electrode and a negative electrode flat plate as the negative electrode are stacked with the separator interposed therebetween; and a flat-plate stack including the positive electrode flat plate, the separator, and the negative electrode flat plate is housed in a laminate film package container.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A nonaqueous electrolyte secondary battery (1) comprising:
a positive electrode including a positive electrode current collector (41a), and a positive electrode active material layer (41b, 41c) formed on the positive electrode current collector (41a);
a negative electrode including a negative electrode current collector (42a), and a negative electrode active material layer (42b, 42c) formed on the negative electrode current collector (42a);
a separator (43) disposed between the positive electrode and the negative electrode; and
an electrolyte solution, wherein
the positive electrode active material layer (41b, 41c) includes a first positive electrode active material with a spinel structure, and a second positive electrode active material with a layered crystal structure,
the negative electrode active material layer (42b, 42c) includes a negative electrode active material and an aqueous binder, and
a mass ratio (A/B) of the first positive electrode active material (A) to the second positive electrode active material (B) is in a range of 70/30 to 95/5.

2. A nonaqueous electrolyte secondary battery (1) comprising:
a positive electrode including a positive electrode current collector (41a), and a positive electrode active material layer (41b, 41c) formed on the positive electrode current collector (41a);
a negative electrode including a negative electrode current collector (42a), and a negative electrode active material layer (42b, 42c) formed on the negative electrode current collector (42a);
a separator (43) disposed between the positive electrode and the negative electrode; and
an electrolyte solution, wherein
the positive electrode active material layer (41b, 41c) includes a first positive electrode active material with a spinel structure, and a second positive electrode active material with a layered crystal structure,
the negative electrode active material layer (42b, 42c) includes a negative electrode active material and an aqueous binder, and
a thickness (Ta) of the positive electrode active material layer (41b, 41c) is larger than a thickness (Tb) of the negative electrode active material layer (42b, 42c).

3. The nonaqueous electrolyte secondary battery (1) according to claim 1, wherein a thickness (Ta) of the positive electrode active material layer (41b, 41c) is larger than a thickness (Tb) of the negative electrode active material layer (42b, 42c).

4. The nonaqueous electrolyte secondary battery (1) according to claim 1 or 3, wherein the mass ratio (A/B) of the first positive electrode active material (A) to the second positive electrode active material (B) is in a range of 75/25 to 95/5.

5. The nonaqueous electrolyte secondary battery (1) according to any one of claims 1 to 4, wherein the aqueous binder includes a rubber polymer and a water-soluble polymer.

6. The nonaqueous electrolyte secondary battery (1) according to claim 5, wherein a content ratio of the rubber polymer is more than or equal to a content ratio of the water-soluble polymer.

7. The nonaqueous electrolyte secondary battery (1) according to claim 5 or 6, wherein the water-soluble polymer includes carboxymethyl cellulose.

8. The nonaqueous electrolyte secondary battery (1) according to any one of claims 5 to 7, wherein the rubber polymer includes at least one polymer selected from the group consisting of styrene-butadiene rubber, acrylonitrile-butadiene rubber, methylmethacrylate-butadiene rubber, and methylmethacrylate rubber.

9. The nonaqueous electrolyte secondary battery (1) according to any one of claims 5 to 7, wherein the rubber polymer includes styrene-butadiene rubber.

10. The nonaqueous electrolyte secondary battery (1) according to any one of claims 1 to 9, wherein the aqueous binder is contained by 1 to 10 mass% in the negative electrode active material layer (42b, 42c).

11. The nonaqueous electrolyte secondary battery (1) according to any one of claims 1 to 10, wherein the negative electrode active material layer (42b, 42c) includes coated graphite.

12. The nonaqueous electrolyte secondary battery (1) according to any one of claims 1 to 11, wherein the electrolyte solution includes cyclic carbonate and chained carbonate, and a volume mixing ratio (cyclic carbonate/chained carbonate) is in a range of 1/9 to 4/6.

13. The nonaqueous electrolyte secondary battery (1) according to any one of claims 1 to 12, wherein a ratio (C_{A}/C_{C}) of a charging capacity C_{A} per unit area of the negative electrode active material layer (42b, 42c) to a charging capacity C_{C} per unit area of the positive electrode active material layer (41b, 41c) is in a range of 1 to 1.3.

14. The nonaqueous electrolyte secondary battery (1) according to any one of claims 1 to 13, further comprising a flat-plate stack housed in a laminate film package container, wherein the flat-plate stack includes the positive electrode and the negative electrode stacked with the separator (43) interposed therebetween.
